Europäisches Patentamt

European Patent Office

Office européen des brevets

(11) Numéro de publication : **0 013 213**
**B1**

(12) ## FASCICULE DE BREVET EUROPÉEN

(45) Date de publication du fascicule du brevet :
30.09.81

(21) Numéro de dépôt : 79401011.6

(22) Date de dépôt : 13.12.79

(51) Int. Cl.³ : **A 47 B 95/04**, F 16 B 5/06,
F 16 B 5/12

(54) **Système de fixation amovible de panneaux d'habillage sur des éléments tels que des meubles ou appareils ménagers.**

(30) Priorité : 22.12.78 FR 7836250

(43) Date de publication de la demande :
09.07.80 (Bulletin 80/14)

(45) Mention de la délivrance du brevet :
30.09.81 Bulletin 81/39

(84) Etats contractants désignés :
DE GB IT SE

(56) Documents cités :
DE - A - 1 554 341
FR - A - 1 227 110
FR - A - 1 391 481
US - A - 3 104 739

(73) Titulaire : "THOMSON-BRANDT"
173, bld Haussmann
F-75360 Paris Cedex 08 (FR)

(72) Inventeur : Lemoine, Marcel
"THOMSON-CSF" - SCPI 173, bld Haussmann
F75360 Paris Cedex 08 (FR)

(74) Mandataire : Thierr, Francoise et al
"THOMSON-CSF"- SCPI 173, bld Haussmann
F-75360 Paris Cedex 08 (FR)

Imprimerie Jouve, 17, rue du Louvre, 75001 Paris, France

Système de fixation amovible de panneaux d'habillage sur des éléments tels que des meubles
ou appareils ménagers

La présente invention concerne un système perfectionné pour fixer de manière amovible des panneaux d'habillage sur des façades de meubles ou appareils, par exemple machine à laver le linge ou la vaisselle, réfrigérateur, etc... Il est actuellement classique de disposer sur les façades de ces meubles ou appareils des panneaux de stratifié que l'on peut changer facilement en fonction par exemple des couleurs du local dans lequel ils sont installés ou des éléments voisins. Ces panneaux décoratifs sont généralement maintenus par des cornières disposées sur les côtés latéraux de la façade, ces cornières étant elles-mêmes fixées par des vis par exemple et présentant un rebord en façade qui maintient le panneau de stratifié. Ces dispositifs présentent l'inconvénient que les vis de fixation des cornières sont apparentes et inesthétiques.

Un autre mode de fixation amovible connu consiste en une cornière que l'on fait coulisser par une des extrémités de l'élément que doit équiper le panneau. Ici se pose le problème du débattement nécessaire pour l'enlèvement et la mise en place des cornières.

Dans un autre domaine que celui de la fixation amovible de panneaux d'habillage sur des façades, on connaît par le document FR-A-1 391 481 un système pour fixer une baguette ou un jonc sur un support à décorer, ce système consistant en une agraffe montée qur le support qui comporte à cet effet des ouvertures. L'agraffe une fois montée sur le support, la baguette vient s'encliqueter sur l'agraffe.

Ce document se contente de permettre la fixation d'une baguette sur un support, mais n'est nullement utilisable pour résoudre le problème de la fixation d'un panneau amovible sur une surface.

La présente invention concerne un système de fixation amovible des panneaux d'habillage, en stratifié par exemple, ce système ne présentant pas les inconvénients mentionnés ci-dessus.

Selon la présente invention, un système de fixation amovible d'un panneau d'habillage sur la façade d'un élément tel qu'un meuble ou appareil ménager, est caractérisé en ce qu'il comporte :
. — au moins une pièce en un matériau élastique fixée de manière amovible sur une paroi latérale de la façade à habiller, cette pièce comportant une partie plane le long de la paroi latérale, un rebord avant maintenant le panneau contre la face avant de la façade et une partie arrière légèrement en saillie par rapport à la façade, la partie plane de la pièce en matériau élastique étant évidée de manière que sa partie arrière en saillie soit élastique et puisse se déplacer vers l'avant lorsqu'elle y est sollicitée ;
— et en ce qu'il comporte en outre une cornière profilée comportant une partie plane venant recouvrir la partie plane de la pièce élastique lorsque la cornière est en place, une partie arrière venant s'enclencher au montage dans la partie arrière en saillie de ladite pièce élastique, et un rebord avant venant recouvrir le rebord avant de la pièce élastique après l'enchenchement de la partie arrière.

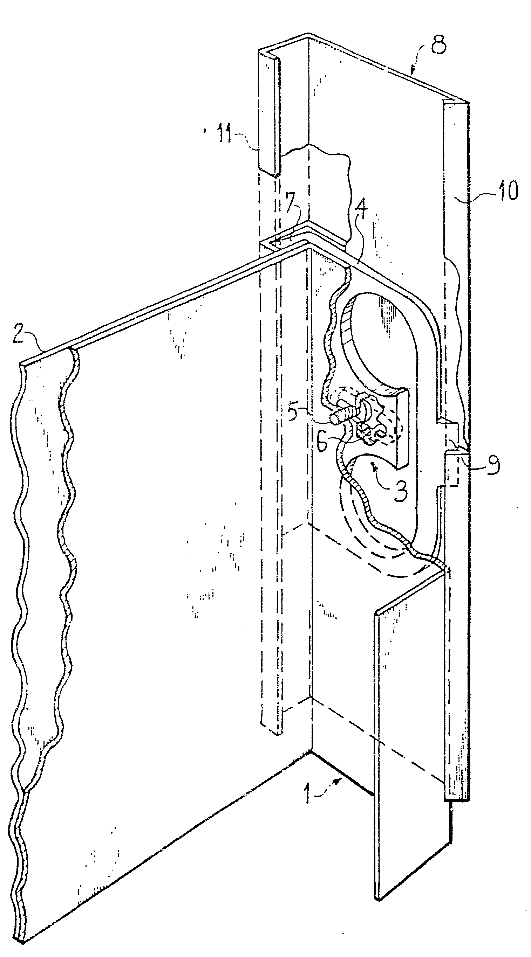

D'autres objets, caractéristiques et avantages de l'invention ressortiront de la description suivante donnée à titre d'exemple non limitatif et illustrée par la figure unique annexée qui représente une vue en perspective, partiellement arrachée, d'un système de fixation conforme à l'invention.

On a représenté en 1 une partie de façade d'un élément à habiller, cet élément pouvant être, comme déjà dit, une façade de meuble ou une façade d'appareil ménager. La façade est représentée ici comme étant constituée d'une tôle pliée ; elle pourrait tout aussi bien être constituée par un panneau plein. La face avant de cette façade 1 est recouverte d'un panneau 2, stratifié par exemple, qui doit pouvoir être facilement mis en place et enlevé.

Pour cela l'invention prévoit un système de fixation comportant essentiellement deux pièces. Une première pièce 3 de fixation proprement dite, est constituée en un matériau élastique tel qu'une matière plastique légèrement déformable. Cette pièce 3 comporte une partie plane 4 qui vient se placer sur la paroi latérale de la façade 1 à habiller. La fixation en est assurée par exemple par une vis 5 passant dans une fente 6 à rebord de la pièce 3 et traversant la paroi latérale de la façade à habiller.

La pièce 3 comporte un rebord avant 7 qui vient maintenir le panneau 2 en place sur la façade qu'il habille. Pour que le système de fixation permette de disposer des panneaux d'habillage de différentes épaisseurs, la fente 6 par laquelle la pièce 3 est fixée sur la paroi latérale de la façade 1, est une fente oblongue de manière que le rebord avant de la pièce 3 puisse être réglé en distance par rapport à la face avant de la façade 1.

La seconde pièce constituant le système de fixation conforme à l'invention, consiste en une cornière profilée 8 qui va venir cacher, lorsque la fixation de la pièce 3 est réalisée, l'ensemble de cette pièce et de la paroi latérale de la façade 1.

La mise en place de cette cornière 8 est assurée, grâce au système de fixation de l'invention, d'une manière particulièrement simple et ne nécessitant pratiquement aucun débattement comme c'était le cas pour certaines cornières coulissantes de l'art antérieur.

Pour cela, la pièce 3 de fixation comporte à sa partie arrière, une partie 9 légèrement en saillie par rapport à la façade qu'elle équipe. Dans le mode de réalisation illustré sur la figure cette partie en saillie 9 consiste en une partie dépassant légèrement la face arrière de la façade 1.

La pièce 3 de fixation est évidée en une zone qui se situe au moins entre la partie en saillie 9, et la zone de fixation de la pièce 3 (vis 5).

Cet évidement donne une certaine élasticité à la partie arrière de la pièce 3, et notamment à la partie en saillie 9 qu'elle supporte. Cette élasticité va être utilisée pour, d'une part, mettre en place la cornière 8 et, d'autre part, maintenir cette cornière en place.

A cet effet, la cornière 8 comporte elle-même un rebord arrière 10 qui va venir s'enclencher sur la partie en saillie 9 de la pièce 3.

Après la mise en place du panneau 2 et de la pièce 3 qui le maintient fixé contre la façade 1, la cornière 8 est mise en place de la façon suivante.

Le rebord arrière 10 de la cornière 8 est enclenché dans la partie en saillie 9 de la pièce 3. Une poussée est assurée sur ce rebord 10, qui enfonce la partie en saillie 9 de la pièce 3 et permet au rebord avant 11 de la cornière 8 de venir recouvrir le rebord avant 7 de la pièce 3. La cornière ayant été ainsi mise en place autour de la pièce 3 et de la paroi latérale de la façade 1, son maintien est assuré par l'effet de ressort de la partie arrière 9 de la pièce 3.

L'évidement représenté sur la figure dans la pièce 3 comporte ici, en plus de la partie se trouvant entre la saillie 9 de la pièce 3, et son point de fixation (vis 5), deux zones largement évidées qui concourent à donner une bonne élasticité à la partie 9. Cette forme d'évidement n'est bien entendu pas la seule possible.

Il est clair que plusieurs systèmes de fixation tels que décrits peuvent être disposés le long de la paroi latérale de la façade 1 à équiper du panneau 2.

Dans le mode de réalisation illustré sur la figure, la partie en saillie 9 de la pièce 3 comporte une surface inclinée que va épouser le rebord 10 de la cornière 8 incliné sensiblement de la même manière ; cette inclinaison facilite les mise en place et enlèvement de la cornière 8 sur la pièce 3.

Il peut être noté que ce mode de réalisation n'est pas le seul qui soit possible pour la partie en saillie 9. La caractéristique essentielle de cette partie en saillie est d'une part qu'elle permette l'accrochage de la cornière 8 et d'autre part qu'elle soit élastique, ce qui est possible grâce à l'évidement pratiqué dans la pièce 3.

Le démontage du système de fixation de l'invention est également très simple à réaliser. Il suffit de pousser légèrement la cornière 8 vers l'avant de la façade 1, ce qui est possible grâce à l'élasticité de la partie 9 de la pièce 3, de désenclencher le rebord 11 de la cornière 8 du rebord 7 de la pièce 3, d'enlever la cornière 8 par le côté de la façade 1, ce qui ne nécessite aucun débattement, enfin de dévisser la ou les pièces 3 et d'enlever le panneau 2.

Les avantages du système de la présente invention apparaissent clairement : aucune pièce de fixation n'est visible lorsque l'ensemble est monté ; le montage et le démontage se font simplement sans qu'il soit besoin de prévoir de débattement pour la cornière.

## Revendications

1. Système de fixation amovible d'un panneau (2) d'habillage sur la façade (1) d'un élément tel qu'un meuble ou appareil ménager, caractérisé en ce qu'il comporte ;

— au moins une pièce (3) en un matériau élastique fixée de manière amovible sur une paroi latérale de la façade (1) à habiller, cette pièce (3) comportant une partie plane (4) le long de la paroi latérale, un rebord avant (7) maintenant le panneau (2) contre la face avant de la façade (1) et une partie arrière (9) légèrement en saillie par rapport à la façade (1), la partie plane (4) de la pièce en matériau élastique étant évidée de manière que sa partie arrière en saillie (9) soit élastique et puisse se déplacer vers l'avant lorsqu'elle y est sollicitée ;

— et en ce qu'il comporte en outre une cornière (8) profilée comportant une partie plane venant recouvrir la partie plane (4) de la pièce élastique (3) lorsque la cornière (8) est en place, une partie arrière (10) venant s'enclencher au montage dans la partie arrière en saillie (9) de ladite pièce élastique (3), et un rebord avant (11) venant recouvrir le rebord avant (7) de la pièce élastique (3) après l'enclenchement de la partie arrière.

2. Système de fixation selon la revendication 1, caractérisé en ce que la partie arrière en saillie (9) de la pièce élastique (3) consiste en une protubérance dépassant légèrement la face arrière de la façade (1), cette protubérance comportant une surface inclinée d'une inclinaison sensiblement identique à celle du rebord arrière (10) de la cornière (8), de manière que, lors de la mise en place de cette partie arrière (10) de la cornière (8), celle-ci vienne épouser l'inclinaison de ladite partie arrière en saillie (9).

3. Système de fixation selon l'une quelconque des revendications précédentes, caractérisé en ce que l'évidement de la pièce élastique (3) consiste au moins en une zone évidée située entre : le point de fixation de la pièce (3) sur la paroi latérale de la façade (1), et la partie arrière (9) en saillie de cette pièce (3).

4. Système de fixation selon la revendication 3, caractérisé en ce que l'évidement comporte en outre deux parties largement évidées prolongeant la partie d'évidement précitée, de part et d'autre du point de fixation de la pièce élastique (3) sur la paroi latérale de la façade (1).

## Claims

1. A system for removably securing a facing panel (2) on the front (1) of an element such as a piece of furniture or a household appliance, characterized in that it comprises :

— at least one handle (3) of an elastic material removably fixed to a sidewall of the front (1) to be covered and including a flat portion (4) along the sidewall, a forward shoulder (7) holding the facing panel (2) against the outer surface of the front (1), and a rearward portion (9) projecting to some extent relative to the front (1), wherein the flat portion (4) of the handle of elastic material is recessed such that its projecting rearward portion (9) is elastic and may be displaced forwardly when being urged in said direction;

— and furthermore an angled strip (8) including a flat portion covering the flat portion (4) of the elastic handle (3) when the angled strip (8) is in place, a rearward portion (10) which upon assembly latchingly engages at the projecting rearward portion (9) of the elastic handle (3), and a forward shoulder (11) which after latching of the rearward portion covers the forward shoulder (7) of the elastic handle (3).

2. A system according to claim 1, characterized in that the projecting rearward portion (9) of the elastic handle (3) consists of a projection slightly protruding over the back surface of the front (1) and having an inclined face with an inclination essentially equal to the inclination of the rearward shoulder (10) of the angled strip (8) such that upon insertion of this rearward portion (10) of the angled strip (8) said portion will mould itself to the inclination of the rearward projecting portion (9).

3. A system according to any of the preceding claims, characterized in that the recess of the elastic handle (3) consists of at least one recessed zone provided between the fastening point of the handle (3) on the sidewall of the front (1) and the rearward portion (9) projecting from the handle (3).

4. A system according to claim 3, characterized in that the recess additionally is provided with two large recessed areas which form a continuation of the aforementioned recessed zone on either side of the fastening point of the elastic handle (3) on the sidewall of the front (1).

**Ansprüche**

1. System zur abnehmbaren Befestigung einer Verkleidungsplatte (2) auf der Vorderseite (1) eines Elements, wie eines Möbelstücks oder Haushaltsgerätes, dadurch gekennzeichnet, daß es aufweist:

— mindestens einen Halter (3) aus einem elastischen Material, der abnehmbar auf einer Seitenwand der zu verkleidenden Vorderseite (1) befestigt ist und einen ebenen Teil (4) längs der Seitenwand, eine vordere Randleiste (7), welche die Verkleidungsplatte (2) gegen die Vorderfläche der Vorderseite (1) hält, und einen bezüglich der Vorderseite (1) etwas vorspringenden hinteren Teil (9) aufweist, wobei der ebene Teil (4) des Halters aus elastischem Material so ausgenommen ist, daß sein vorspringender hinterer Teil (9) elastisch ist und sich nach vorn verschieben kann, wenn er dorthin beaufschlagt wird;

— und daß es außerdem eine Winkelprofilleiste (8) aufweist, die einen ebenen Teil, der den ebenen Teil (4) des elastischen Halters (3) abdeckt, wenn sich die Winkelprofilleiste (8) an ihrem Platz befindet, einen hinteren Teil (10), der bei der Montage am vorspringenden hinteren Teil (9) des elastischen Halters (3) einrastet, und eine vordere Randleiste (11), welche nach dem Einrasten des hinteren Teils die vordere Randleiste (7) des elastischen Halters (3) abdeckt, aufweist.

2. Befestigungssystem nach Anspruch 1, dadurch gekennzeichnet, daß der vorspringende hintere Teil (9) des elastischen Halters (3) aus einem Vorsprung besteht, der etwas über die Rückfläche der Vorderseite (1) vorsteht und eine Schrägfläche aufweist, deren Neigung im wesentlichen gleich der Neigung der hinteren Randleiste (10) der Winkelprofilleiste (8) ist, sodaß beim Einsetzen dieses hinteren Teils (10) der Winkelprofilleiste (8) dieser sich der Neigung des hinteren vorspringenden Teils (9) anschmiegt.

3. Befestigungssystem nach einem der vorangehenden Ansprüche, dadurch gekennzeichnet, daß die Aussparung des elastischen Halters (3) aus mindestens einer Aussparungszone besteht, die angeordnet ist zwischen dem Punkt der Befestigung des Halters (3) an der Seitenwand der Vorderseite (1) und dem von diesem Halter (3) vorspringenden hinteren Teil (9).

4. Befestigungssystem nach Anspruch 3, dadurch gekennzeichnet, daß die Aussparung außerdem zwei große Aussparungsbereiche aufweist, welche die vorher erwähnte Aussparungszone beiderseits des Befestigungspunktes des elastischen Halters (3) an der Seitenwand der Vorderseite (1) fortsetzen.

4